# EUROPÄISCHE PATENTSCHRIFT

(11) **EP 0 677 899 B1**
(45) Veröffentlichungstag und Bekanntmachung des Hinweises auf die Patenterteilung: **06.05.1998**
(21) Anmeldenummer: 95111289.5
(22) Anmeldetag: 02.03.1993
(51) Int. Cl.: H01R 25/16, H02G 3/12

(54) **Kombination aus einem Elektro-Installationsgerät und einem Montageelement für Installationskanäle**
Combination of electrical installation equipment and mounting element for installation channel
Combinaison d'un appareil électrique d'installation et un élement de montage pour canal d'installation

(30) Priorität: 09.03.1992 DE 9203112 U
(43) Veröffentlichungstag der Anmeldung: 18.10.1995
(62) Teilanmeldung aus: 93103263.5
(73) Patentinhaber: Tehalit GmbH, D-67716 Heltersberg (DE)
(72) Erfinder: Riccardi,Oliver, D-58579 Schalksmühle (DE); Koch,Fritz Eduard, D-58579 Schalksmühle (DE); Pollak,Gottfried,Dipl.-Ing. FH, D-67714 Waldfischbach-Burgalben (DE); Scherer,Peter,Dipl.-Ing. FH, D-66287 Quierschied (DE); Lutz,Karl, D-67714 Waldfischbach-Burgalben (DE)
(74) Vertreter: Patentanwälte Möll und Bitterich

(56) Entgegenhaltungen:
- EP-A- 0 391 713
- DE-U- 7 510 974

## Beschreibung

Die Erfindung betrifft Kombinationen aus einem Elektro-Installationsgerät und einem Montageelement gemäß dem Oberbegriff des Anspruchs 1.

Montageelemente, mit deren Hilfe Elektro-Installationsgeräte schnell, sicher, dauerfest und trotzdem lösbar in Installationskanälen befestigt werden können sind beispielsweise bekannt aus der DE-U-7 510 974, der DE-U 77 28 102 oder der DE-U 70 40 540.

Die DE-U 77 28 102 zeigt ein Montageelement in Form einer Geräteeinbaudose mit etwa quadratischem Grundriß und einem am Dosenboden angelenkten, den Boden durchgreifenden Klappmechanismus als Befestigungselement. Die Befestigung des Elektro-Installationsgeräte in dieser Gerätedose erfolgt in einfachster Weise mittels Schrauben.

Der vorliegenden Erfindung liegt die Aufgabe zugrunde, eine Kombination aus einem Elektro-Installationsgerät und einem Montageelement im Hinblick auf eine möglichst einfache Montage und Demontage des Elektro-Installationsgerätes hin weiterzuentwickeln.

Diese Aufgabe wird gelöst durch eine Kombination mit den Merkmalen des Anspruchs 1.

Dank des Bajonettverschlusses ist die Verbindung zwischen Gerätedose und Elektro-Installationsgerät schnell hergestellt und schnell gelöst, wobei dem Deckel, vorzugsweise Klappdeckel, an der Gerätedose die Aufgabe zukommt, im geschlossenen Zustand sowohl das Elektro-Installationsgerät zu blockieren als auch die zum Anschließen der elektrischen Leitungen und Drähte vorgesehenen Anschlußleisten abzudecken.

Gemäß einer vorteilhaften Weiterbildung der Erfindung sind die Bajonettverschlußnocken etwa L- oder T-förmig ausgebildet, wobei die Bajonettverschlußnuten vorteilhafterweise in die Längswände durchbrechende Bajonettöffnungen auslaufen. Auf diese Weise werden bei eingesetztem Elektro-Installationsgerät die Längswände der Gerätedose formschlüssig gehalten, können also bei Druck oder Zug auf das Installationsgerät nicht federnd ausweichen; das Installationsgerät kann sich nicht von selbst lösen.

Diese und weitere Ausgestaltungen der vorliegenden Erfindung sind Gegenstand der Unteransprüche. Sie werden zusätzlich und beispielhaft erläutert anhand der Zeichnung. Darin zeigen
- Fig. 1: eine erste perspektivische Darstellung eines zu einer Gerätedose weiterentwickelten Montageelements,
- Fig. 2: eine weitere perspektivische Darstellung der Gerätedose nach Fig. 1 mit eingesetztem Elektro-Installationsgerät,
- Fig. 3: einen Querschnitt durch einen Leitungs-Installationskanal mit montierter, teilweise aufgebrochener Gerätedose und darin eingesetztem Elektro-Installationsgerät,
- Fig. 4: eine Draufsicht auf die Unterseite des Elektro-Installationsgerätes,
- Fig. 5: eine perspektivische Darstellung einer Gerätedose mit Elektro-Installationsgerät in Form einer TAE-Funktionseinheit und
- Fig. 6: eine perspektivische Darstellung einer Gerätedose mit Elektro-Installationsgerät in Form einer Datensteckvorrichtung.

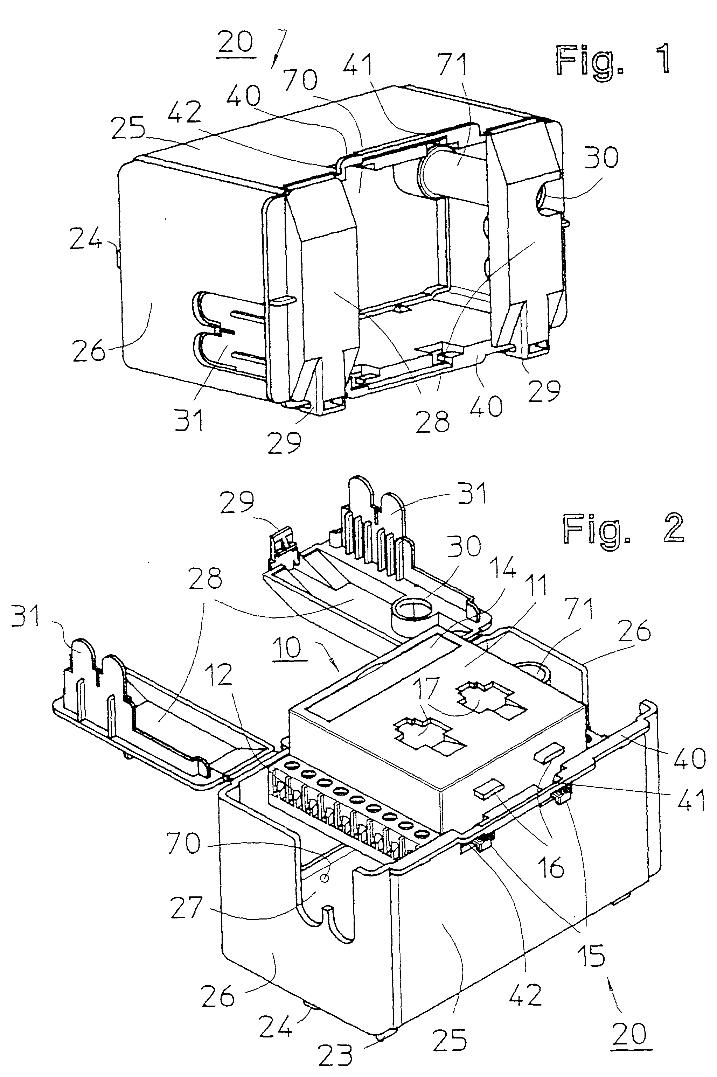

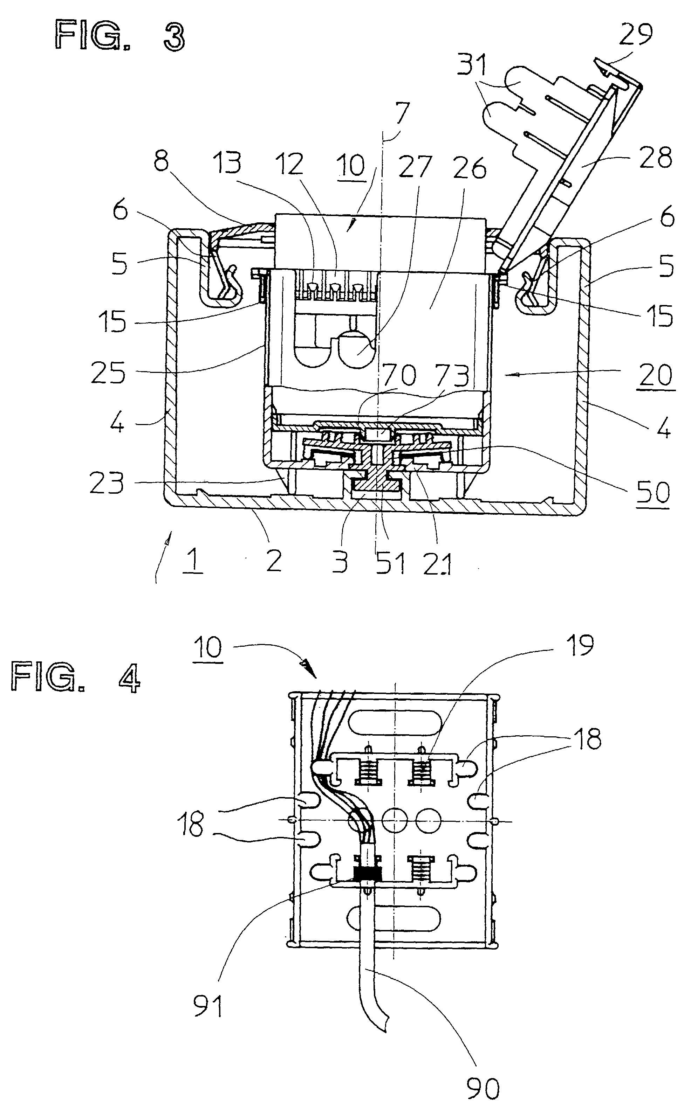

Die Fig. 1 und 2 zeigen in unterschiedlichen perspektivischen Darstellungen eine Geräteeinbaudose 20 zur lösbaren Montage in Installationskanälen 1 (Fig. 3) einerseits und zur Aufnahme von Elektro-Installationsgeräten (Fig. 2) andererseits. Man erkennt das eigentliche Montageelement 20, bestehend aus einem Bodenteil 21, zwei Längswänden 25 und zwei Querwänden 26. Füße 23 und zentrische Führungsnocken 24 an der Unterseite des Bodenteils 21 dienen der Befestigung im Installationskanal 1, wie es anhand der Fig. 3 noch näher erläutert wird. Das Bodenteil 21 ist rechteckig, die Oberseite der Geräteeinbaudose 20 ist offen. Ihre beiden Endbereiche sind mit Hilfe von Klappdeckeln 28 verschließbar. Zu diesem Zweck sind die Klappdeckel 28 mit Rastverschlüssen 29 ausgerüstet.

In die Querwände 26 sind jeweils zwei torbogenartige Kabeleinführungsöffnungen 27 eingeformt. Beide Kabeleinführungsöffnungen 27 sind zur selben Längswand 25 hin verschoben. Der Sinn dieser Maßnahme wird anhand Fig. 3 noch näher erläutert werden.

An den Klappdeckeln 28 sind Abdeckungen 31 angeformt, die bei geschlossenen Klappdeckeln 28 nicht benützte Kabeleinführungsöffnungen 27 abdecken. Die Abdeckungen 31 sind bereichsweise elastisch abbiegbar, müssen also nicht entfernt werden.

In die Geräteeinbaudose 20 ist ein Zwischenboden 70 eingerastet, der die eigentliche Klemmechanik abdeckt. Auf dem Zwischenboden 70 ist ein Schutzzylinder 71 errichtet, der mit einer Deckelöffnung 30 in einem der Klappdeckel 28 fluchtet. Durch Deckelöffnung 30 und Schutzzylinder 71 kann ein Schraubendreher gesteckt werden, um die Klemmechanik zu betätigen, ohne daß die Gefahr besteht, daß in der Geräteeinbaudose 20 freiliegende Drähte und Leitungen beschädigt werden.

Fig. 2 zeigt bei geöffneten Klappdeckeln 28 ein eingesetztes Elektro-Installationsgerät 10, hier eine Western-Telefon-Doppelsteckdose. An den beiden Seitenwänden des Gerätegehäuses 11 sind T- bzw. L-förmige Bajonettverschlußnocken 15 angeformt. In den Seitenwänden 25 der Geräteeinbaudose 20 sind entsprechende Bajonettverschlußnuten 41 eingeformt, die in Bajonettverschlußöffnungen 42 enden. Außerdem ist der obere Rand der Längswände 25 mit einer Randverstärkung 40 versehen. Dank der T- bzw. L-Form der Bajonettverschlußnocken 15 besteht eine formschlüssige Verbindung zwischen den Seitenwänden 25 der Geräteeinbaudose 20 und dem Gerätegehäuse 11, so daß die Längswände 25 bei Druck oder Zug auf das Installationsgerät 10 nicht seitlich ausweichen können.

Das hier dargestellte Elektro-Installationsgerät 10 besitzt vorne und hinten je eine Anschlußleiste 12, an der die elektrischen Drähte und Leitungen angeschlossen werden. Die Anschlußleisten 12 sind bei geöffneten Klappdeckeln 28 gut zugänglich. Sobald der vordere Klappdeckel 28 geschlossen wird, wird das Elektro-Installationsgerät 10 mechanisch blockiert. Auch wenn beide Deckel 28 geschlossen sind, bleibt der Klemmechanismus durch die Deckelöffnung 30 und den Schutzzylinder 71 hindurch zugänglich.

Die Frontseite des Gerätegehäuses 11 trägt hier zwei Steckbuchsen 17 sowie ein unverlierbar angelenktes, herausklappbares, reinigungssicheres Kennzeichnungsschild 14, das somit den Steckbuchsen 17 unverwechselbar zugeordnet ist.

Fig. 3 zeigt einen Querschnitt durch einen handelsüblichen Installationskanal 1 mit Kanalrückwand 2, zwei Kanalseitenwänden 4 mit je einem Kanalverschlußprofil 5 und einem aufgerasteten Kanaldeckel 6. Die Kanalrückwand 2 trägt auf ihrer Innenseite eine Längsnut 3 mit etwa T-förmigem Querschnitt.

In den Installationskanal 1 eingesetzt erkennt man das als Geräteeinbaudose ausgebildete Montageelement 20 mit eingesetztem Elektro-Installationsgerät 10. Der vordere Klappdeckel 28 ist geöffnet. Man erkennt einen Teil der Anschlußleiste 12. Die Drahteinführungsöffnungen 13 sind trichterförmig ausgebildet, um das Einführen der Drähte und Leitungen zu erleichtern.

Eingezeichnet ist auch die Mittelebene 7 des Installationskanals 1. Dank der asymmetrischen Anordnung der Kabeleinführungsöffnungen 27 befinden sich diese je nach Montagerichtung des Montageelements 20 entweder links oder rechts der Mittelebene 7, je nach dem, ob elektrische Leitungen aus dem einen oder dem anderen Teil des Installationskanals 1 angeschlossen werden sollen.

Das Montageelement 20 ist im Bodenbereich aufgebrochen dargestellt. Man erkennt somit das eigentliche Bodenteil 21 sowie den Zwischenboden 70, dazwischen ein Klemmteil 50, welches durch eine Öffnung im Bodenteil 21 hindurchgesteckt ist. Sein T-förmiger Klemmkopf 51 kann in die Längsnut 3' eingeführt werden. Nach einer 90-Grad-Drehung legt sich der Klemmkopf 51 gegen die Wände der Längsnut 3 und preßt das Montageelement 20 bzw. dessen Füße 23 gegen die Kanalrückwand 2. Etwaige Abmessungstoleranzen werden durch eine federnde Ausgestaltung des Klemmteils 50 ausgeglichen.

Falls das Klemmteil 50 direkt betätigt werden soll, ist im Zwischenboden 70 eine Öffnung 72 für einen Schraubendreher vorgesehen.

Um das Klemmteil 50 exakter führen zu können, ist an der Unterseite des Zwischenbodens 70 ein Führungsring 73 angeformt, der mit einem entsprechenden Führungszylinder 56 an der Oberseite des Klemmteils 50 zusammenwirkt.

Fig. 4 zeigt einen Blick auf die Unterseite des Elektro-Installationsgeräts 10 der Fig. 2 und 3. Man erkennt angeformte Adernführungen 18 und Kabelhalter 19, mit deren Hilfe Einzeldrähte oder auch Kabel 90 so fixiert werden können, daß die Anschlußstellen ausreichend zugentlastet sind. Dabei werden zur Befestigung des Kabels 90 an den Kabelhaltern 19 handelsübliche Kabelbinder 91 verwendet.

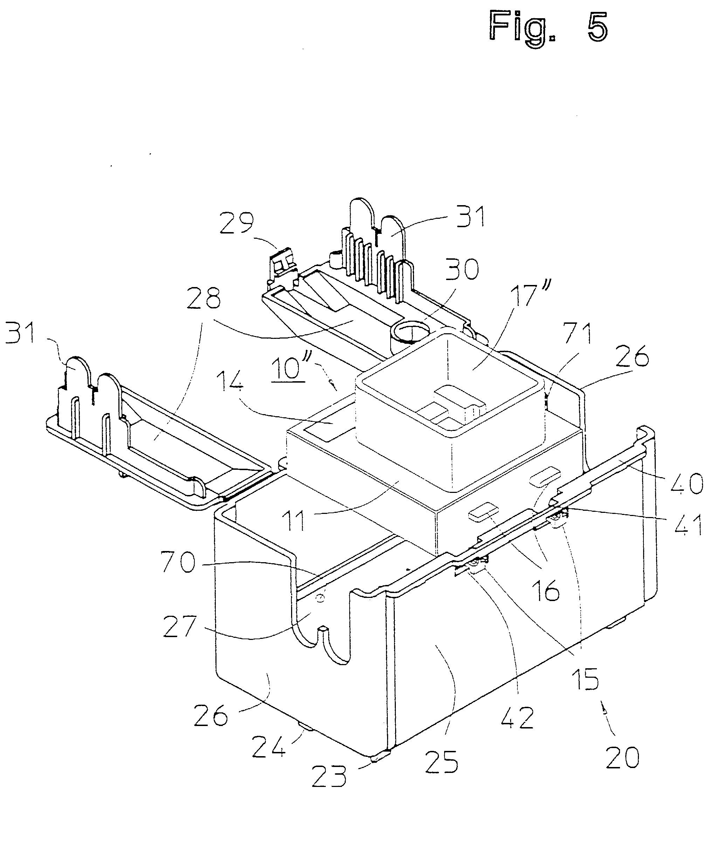

Fig. 5 zeigt in einer der Fig. 2 entsprechenden Darstellung als weiteres Beispiel für ein Elektro-Installationsgerät eine sogenannte TAE-Funktionseinheit 10', wie sie in Deutschland als Steckverbindung für Telekommunikationseinrichtungen - Telefon, Telefax, Anrufbeantworter, Modem usw. - verwendet wird. Während die handelsüblichen TAE-Funktionseinheiten maximal drei parallele Steckvorrichtungen besitzen können, besteht dank der erfindungsgemäßen Konstruktion die Möglichkeit, beispielsweise vier parallele Steckvorrichtungen 17' vorzusehen. Davon können vorzugsweise je zwei auf eine von zwei Anschlußleisten 12 geschaltet sein. Auf diese Weise können zwei getrennte Telekommunikationsverbindungen auf eine Funktionseinheit 10' geschaltet werden. Werden die beiden Anschlußleisten 12 elektrisch verbunden, lassen sich vier Telekommunikationsgeräte an einer Telekommunikationsleitung anstecken.

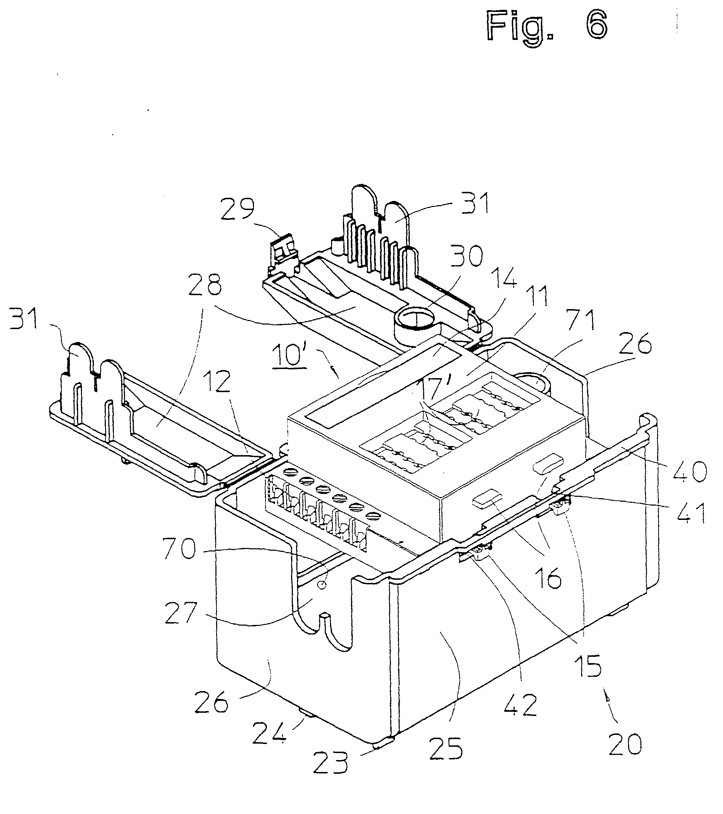

Fig. 6 zeigt als letztes Beispiel ein Elektro-Installationsgerät 10'', welches mit einem firmenspezifischen Datenstecker 17'' ausgerüstet ist, wie er für die Datenübertragung zwischen Computern verwendet wird.

Wie die Fig. 2, 5 und 6 zeigen, lassen sich Elektro-Installationsgeräte der unterschiedlichsten Ausführungen mit immer demselben Montageelement 20 verwenden. In allen Fällen erfolgt die Befestigung der Geräteeinbaudose 10, 10', 10'' durch ein Bajonett. Nach dem Schließen der Klappdeckel 28 ist ein versehentliches Lösen nicht mehr möglich.

## Patentansprüche

1. Kombination aus einem Elektro-Installationsgerät (10) und einem Montageelement (20), welches einen etwa rechteckigen Boden (21) aufweist, der mit zwei Längswänden (25) und zwei Querwänden (26) zu einer oben offenen Gerätedose ergänzt ist, wobei in wenigstens einer Querwand (26) eine Kabeleinführung (27) ausgespart ist, dadurch gekennzeichnet, daß der Boden (21) ein Klemmteil (50) zur lösbaren Befestigung an der Rückwand (2) von Installations-Kanälen (1) trägt, daß an wenigstens einem Endbereich der offenen Oberseite der Gerätedose ein Deckel (28), vorzugsweise Klappdeckel, angelenkt ist, der im geschlossenen Zustand das Elektro-Installationsgerät (10) blockiert, daß die Längswände (25) eine Randverstärkung (40) aufweisen, daß in die Längswände (25) Bajonettverschlußnuten (41) eingeformt sind und daß das Gehäuse (11) des Installationsgerätes (10) mit Bajonettverschlußnocken (15) ausgerüstet ist, die mit den Bajonettverschlußnuten (41) korrespondieren.

2. Kombination nach Anspruch 1, dadurch gekennzeichnet, daß die Bajonettverschlußnocken (15) etwa L- oder T-förmig sind.

3. Kombination nach Anspruch 1 oder 2, dadurch gekennzeichnet, daß das Elektro-Installationsgerät (10) mit Anschlußleisten (12) ausgerüstet ist, die nach Öffnen des Deckels (28) zugänglich sind und trichterförmige Drahtöffnungen (13) besitzen.

4. Kombination nach Anspruch 1, 2 oder 3, dadurch gekennzeichnet, daß an der Unterseite des Elektro-Installationsgerätes (10) Aderführungen (18) und/oder Kabelhalter (19) angeformt sind.

5. Kombination nach einem der Ansprüche 1 bis 4, dadurch gekennzeichnet, daß jede Bajonettverschlußnut (41) in einer die Längswand (25) durchbrechenden Bajonettöffnung (42) endet.

6. Kombination nach einem der Ansprüche 1 bis 5, dadurch gekennzeichnet, daß am Gehäuse (11) Haltezapfen (16) angeformt sind, auf die eine Geräteabdeckhaube (8) aufrastbar ist, und daß auf seiner Frontseite ein Kennzeichenschild (14) unverlierbar herausklappbar und reinigungssicher montiert ist.

## Claims

1. Combination of an electrical installation appliance (10) and a mounting element (20) comprising an approximately rectangular base (21) which is completed by two longitudinal walls (25) and two transverse walls (26) to form an appliance box which is open at the top, wherein a cable inlet (27) is left free in at least one transverse wall (26), characterised in that the base (21) bears a clamping part (50) so that it can be secured in a removable manner to the rear wall (2) of installation ducts (1), that a lid (28), preferably a hinged lid, is attached to at least one end region of the open top side of the appliance box and blocks off the electrical installation appliance (10) in the closed state, that the longitudinal walls (25) comprise an edge reinforcement (40), that bayonet coupling slots (41) are formed into the longitudinal walls (25), and that the housing (11) of the installation appliance (10) is fitted with bayonet coupling projections (15), which correspond to the bayonet coupling slots (41).

2. Combination according to claim 1, characterised in that the bayonet coupling projections (15) are approximately L-or T-shaped.

3. Combination according to claim 1 or 2, characterised in that the electrical installation appliance (10) is fitted with terminal strips (12) which are accessible after the lid (28) has been opened and have funnel-shaped wire openings (13).

4. Combination according to claim 1, 2 or 3, characterised in that conductor guides (18) and/or cable supports (19) are moulded onto the underside of the electrical installation appliance (10).

5. Combination according to one of claims 1 to 4, characterised in that each bayonet coupling slot (41) ends in a bayonet opening (42) passing through the longitudinal wall (25).

6. Combination according to one of claims 1 to 5, characterised in that retaining studs (16) are moulded onto the housing (11), onto which studs an appliance cover cap (8) can lock, and that an identification plate (14) is mounted at its front such that it can be swung open in a captive manner and is resistant to cleaning.

## Revendications

1. Combinaison formée par un appareil d'installation électrique (10) et un élément de montage (20), qui comporte un fond (21) pratiquement rectangulaire, qui est complété par deux parois longitudinales (25) et deux parois transversales (26) pour former un boîtier pour l'appareil ouvert sur le haut, un orifice de passage pour câble (27) étant réalisé dans au moins une paroi transversale (26), caractérisée en ce que le fond (21) porte une pièce de blocage (50) pour assurer la fixation amovible contre la paroi arrière (2) des gaines d'installation (1), en ce qu'un couvercle (28), de préférence un couvercle rabattable, est articulé contre au moins une extrémité de la face supérieure ouverte du boîtier, ledit couvercle bloquant à l'état fermé l'appareil d'installation électrique (10), en ce que les parois longitudinales (25) comportent un renforcement du bord (40), en ce que des rainures pour emboîtement à baïonnette (41) sont réalisées dans les parois longitudinales (25), et en ce que le boîtier (11) de l'appareil d'installation (10) est muni d'ergots pour emboîtement à baïonnette (15), qui correspondent aux rainures pour emboîtement à baïonnette (41).

2. Combinaison selon la revendication 1, caractérisée en ce que les ergots pour emboîtement à baïonnette (15) sont conçus sensiblement en forme de L ou de T.

3. Combinaison selon la revendication 1 ou 2, caractérisée en ce que l'appareil d'installation électrique (10) est muni de baguettes avec bornes (12), qui sont accessibles après l'ouverture du couvercle (28) et sont munies d'ouvertures coniques pour fils (13).

4. Combinaison selon la revendication 1, 2 ou 3, caractérisée en ce que des glissières de guidage pour conducteurs (18) et/ou des porte-câbles (19) sont formés contre la face inférieure de l'appareil d'installation électrique (10).

5. Combinaison selon l'une quelconque des revendications 1 à 4, caractérisée en ce que chaque rainure pour emboîtement à baïonnette (41) se termine dans un orifice à baïonnette (42) traversant l'une des parois longitudinales (25).

6. Combinaison selon l'une quelconque des revendications 1 à 5, caractérisée en ce que des tenons de retenue (16) sont formés au boîtier (11), sur lesquels il est possible d'encliqueter un capot de protection de l'appareil (8), et en ce qu'une plaque d'identification (14) est montée sur la face frontale dudit boîtier, de manière à pouvoir l'escamoter sans risque de perte et à la rendre accessible pour le nettoyage.
